# EUROPÄISCHE PATENTSCHRIFT

(11) **EP 0 859 146 B1**
(45) Veröffentlichungstag und Bekanntmachung des Hinweises auf die Patenterteilung: **18.04.2001**
(21) Anmeldenummer: 97122369.8
(22) Anmeldetag: 18.12.1997
(51) Int. Cl.: F02M 35/10, F02M 35/12

(54) **Sauganlage für eine Brennkraftmaschine**
Intake system for a combustion engine
Système d'admission pour moteur à combustion

(30) Priorität: 12.02.1997 DE 19705273
(43) Veröffentlichungstag der Anmeldung: 19.08.1998
(73) Patentinhaber: Dr.Ing.h.c. F. Porsche Aktiengesellschaft, 70435 Stuttgart (DE)
(72) Erfinder: Schorn, Jürgen, 71277 Rutesheim (DE)

(56) Entgegenhaltungen:
- EP-A- 0 376 299
- EP-A- 0 379 926
- DE-A- 3 136 824
- DE-A- 19 600 515
- DE-C- 4 305 333
- US-A- 5 161 492
- US-A- 5 417 195
- PATENT ABSTRACTS OF JAPAN vol. 15, no. 393 (M-1165), 4. Oktober 1991 & JP 03 160152 A (MITSUBISHI), 10. Juli 1991

## Beschreibung

Eine derartige Sauganlage für eine Brennkraftmaschine mit einer zwischen einem Luftfilter und einer Drosseleinrichtung angeordneten Ansaugleitung, in der ein Luftmengen- oder Luftmassenmesser angeordnet ist, ist beispielsweise aus Bosch Technische Unterrichtung, Motormanagement Motronic 08.93 bekannt. Um bei einer derartigen Sauganlage ein Meßsignal des Luftmengen- oder Luftmassenmessers mit hoher Meßgenauigkeit zu erzielen, sind über den gesamten Drehzahlbereich der Brennkraftmaschine möglichst gleichmäßige Strömungsverhältnisse im Bereich des Luftmengen- oder Luftmassenmessers erforderlich. Die Strömungsverhältnisse an diesem Luftmengen- oder Luftmassenmesser werden neben anderen Einflußfaktoren durch auftretende Resonanzschwingungen innerhalb der Sauganlage beeinflußt. Werden in einer derartigen Sauganlage zur Anpassung an unterschiedliche Betriebsverhältnisse zusätzliche Schaltklappen eingesetzt, führt dies zu weiteren Beeinflussungen der Strömungsverhältnisse, die die Qualität des Meßsignals beeinflussen. Bei derartigen Sauganlagen werden daher auftretende Meßfehler bzw. Meßungenauigkeiten aufgrund starker Luftpulsationen in der Ansaugleitung durch eine Pulsationskorrektur in der Auswerteeinheit des Meßsignals kompensiert.

Aus der DE-A-34 16 950 ist eine Sauganlage für eine Brennkraftmaschine bekannt, bei der ein Resonanzbehälter parallel zur Ansaugleitung zwischen Luftfilter und Drosseleinrichtung angeordnet ist. Dieses Resonanzrohr hat eine erste Verbindung zur Ansaugleitung kurz hinter dem Luftfilter und ist in der Nähe der Drosseleinrichtung über eine regelbare Öffnung ein weiteres Mal mit der Ansaugleitung koppelbar. Mit einer derartigen Sauganlage soll eine Leistungsteigerung durch bessere Ausnützung der dynamischen Effekte innerhalb der Sauganlage ermöglicht und eine Ansauggeräuschreduzierung erzielt werden.

Weiterhin ist aus der US-PS 5,417,195 eine Sauganlage für eine Brennkraftmaschine bekannt, bei der an die Ansaugleitung ein Resonanzbehälter angekoppelt ist, der zur Unterdrückung von Resonanzschwingungen in der Ansaugleitung vorgesehen ist. Die Frequenz der Resonanzkammer ist dabei auf die Resonanzfrequenz im Leerlaufbetrieb der Brennkraftmaschine abgestimmt. Die der Brennkraftmaschine zugeführte Luftmenge wird dabei mit Hilfe eines in Strömungsrichtung vor dem Resonanzbehälter angeordneten Luftmengenmessers bestimmt.

Der Erfindung liegt demgegenüber die Aufgabe zugrunde, eine gattungsgemäße Sauganlage für eine Brennkraftmaschine dahingehend zu verbessern, daß die Qualität des Meßsignals des Luftmengen- oder Luftmassenmessers verbessert wird. Dabei sollen störende Einflüsse durch ungleichmäßige Strömungsverhältnisse im Bereich des Luftmengen- oder Luftmassenmessers verringert werden, so daß eine nachträgliche Korrektur des Meßsignals nicht oder nur in sehr geringem Maße erforderlich ist.

Diese Aufgabe wird durch die Merkmale des Anspruchs 1 erzielt. Ein sehr genaues und gleichmäßiges Meßsignal ergibt sich daher, wenn der Abstand des Helmholtzresonators zum Luftmengen- oder Luftmassenmesser abhängig von der Einbaulage kleiner als der halbe Abstand des Luftmassenmessers entweder zum Luftfilter oder zur Drosseleinrichtung ist. Mit einem derartig positionierten Helmholtzresonator läßt sich der Einfluß von Resonanzschwingungen innerhalb der Ansaugleitung auf das Meßsignal deutlich verringern, so daß eine nachträgliche Korrektur nicht oder nur in sehr geringem Maße erforderlich wird.

Wird der Abstand zwischen dem Anschluß des Helmholtzresonators an die Ansaugleitung und dem Luftmengen- oder Luftmassenmesser so gewählt, daß dieser größer gleich dem 1,5-fachen Durchmesser des Resonatoranschlusses ist, wird die Qualität des Meßsignales noch einmal deutlich verbessert, da der Einfluß der sich möglicherweise im Resonatoranschluß ausbildenden Schwingungen sehr gering ist.

Die Qualität des im Luftmengen- oder Luftmassenmesser erzeugten Meßsignals wird darüber hinaus noch einmal deutlich verbessert, wenn die Ankopplung des Helmholtzresonators an die Ansaugleitung im Bereich eines Schwingungsbauches der sich im Betrieb der Brennkraftmaschine einstellenden Resonanzfrequenz der Ansaugleitung befindet.

Ein besonders gleichmäßiges Meßsignal wird erzielt, wenn die Ankopplung des Helmholtzresonators an die Ansaugleitung im Bereich des ersten Schwingungsbauches der sich in Betrieb der Brennkraftmaschine einstellenden Resonanzfrequenz der Ansaugleitung angeordnet ist, dessen Abstand größer oder gleich dem 1,5-fachen des Durchmessers des Resonatoranschlusses ist.

Weitere Vorteile und vorteilhafte Weiterbildungen der Erfindung ergeben sich aus den Unteransprüchen und der Beschreibung.

Ein Ausführungsbeispiel der Erfindung ist in der nachfolgenden Beschreibung und Zeichnung näher erläutert. Letztere zeigt eine prinzipielle Darstellung der erfindungsgemäßen Sauganlage.

Die erfindungsgemäße Sauganlage wird hier ohne Beschränkung auf diese Ausführungsform am Beispiel einer stark vereinfacht dargestellten zweireihigen Brennkraftmaschine 1 dargestellt. Die einzelnen Zylinder 2 bis 7 dieser Brennkraftmaschine sind einlaßseitig über Saugkanäle 8 bis 13 mit einer Resonanzsauganlage 14 verbunden. Bei der hier exemplarisch dargestellten Resonanzsauganlage 14 sind die Saugkanäle 8 bis 10 bzw. 11 bis 13 einer Zylinderreihe jeweils mit einer Saugkammer 15, 16 verbunden, die wiederum über zwei Verbindungsrohre 17 und 18 miteinander gekoppelt sind. Das Verbindungsrohr 18 ist mit einer Ansaugleitung 19 verbunden. Diese Ansaugleitung ist über eine Drosseleinrichtung 20, einen an sich bekannten Luftmengen- oder Luftmassenmesser 21 und eine Luftfilteranordnung 22 mit der Atmosphäre verbunden. Der Luftmengen- oder Luftmassenmesser 21 ist in diesem Ausführungsbeispiel als an sich bekannter rohrförmiger Heißfilm-Luftmassenmesser ausgebildet, und wird im nachfolgenden als HFM-Rohr 23 bezeichnet.

Zwischen der Drosseleinrichtung 20 und dem HFM-Rohr 23 ist ein als Helmholtzresonator ausgebildeter Resonanzbehälter 24 über einen kurzen Verbindungsstutzen 25 an die Ansaugleitung 19 gekoppelt. Dieser Helmholtzresonator 24 ist auf an sich bekannte Weise auf die sich in der Ansaugleitung im Betrieb der Brennkraftmaschine drehzahlabhängig einstellende Resonanzfrequenz abgestimmt. Die Ankopplung des Helmholtzresonators 24 an die Ansaugleitung 19 erfolgt in unmittelbarer Nähe des HFM-Rohres 23. Der Abstand d zwischen dem Helmholtzresonator 24 bzw. dessen Verbindungsstutzen 25 und dem HFM-Rohr 23 ist dabei kleiner als der halbe Abstand D1 zwischen der Austrittsseite 26 der Filtereinrichtung 22 und dem HFM-Rohr 23. Im Gegensatz zu diesem Ausführungsbeispiel ist es auch möglich, den Helmholtzresonator 24 zwischen der Drosseleinrichtung 20 und dem HFM-Rohr 23 an die Ansaugleitung 19 anzukoppeln. In diesem Fall wird der Abstand d zwischen Helmholtzresonator 24 bzw. dessen Verbindungsstutzen 25 und dem HFM-Rohr 23 so gewählt, daß er kleiner als der halbe Abstand D2 zwischen dem HFM-Rohr 23 und der Drosseleinrichtung 20 ist.

Um die sich im Betrieb der Brennkraftmaschine einstellenden Luftschwingungen im Verbindungsstutzen 25 auf das Meßsignal zu reduzieren bzw. zu verhindern, ist der Abstand d größer gleich dem 1,5-fachen Durchmesser DR des Verbindungsstutzens.

Um ein besonders gleichmäßiges Meßsignal des HFM-Rohres 23 zu erhalten, ist der Anschlußstutzen 25 so angeordnet, daß er im Bereich eines Schwingungsbauches der sich im Betrieb der Brennkraftmaschine einstellenden Resonanzschwingung der Ansaugleitung befindet. Die Resonanzfrequenz der Ansaugleitung und die Position der Schwingungsknoten und Schwingungsbäuche werden bei der Auslegung der Sauganlage auf an sich bekannte Weise ermittelt.

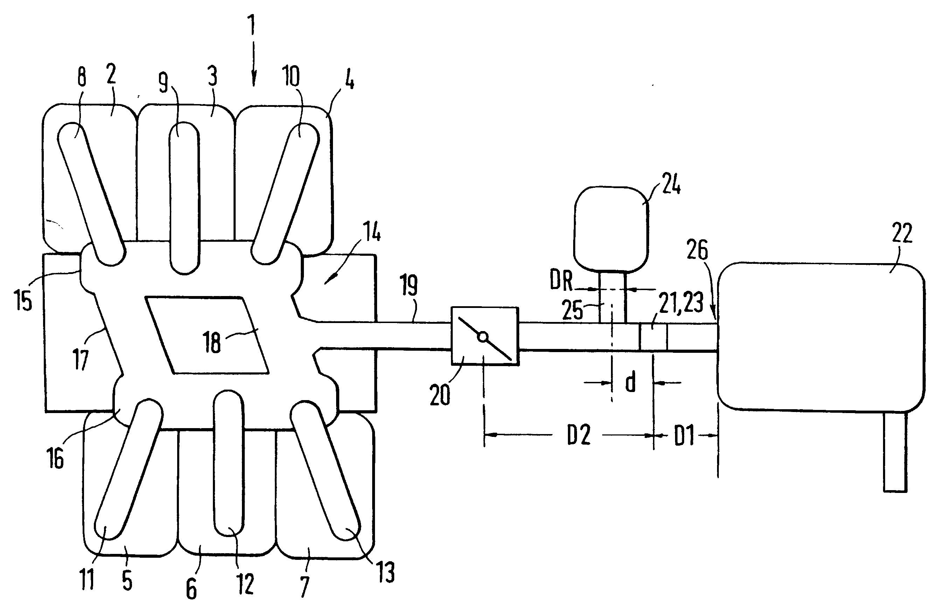

## Patentansprüche

1. Sauganlage für eine Brennkraftmaschine mit einer Ansaugleitung (19), die zwischen einem Luftfilter (22) und einer Drosseleinrichtung (20) verläuft, und mit einem Luftmengen- oder Luftmassenmesser (21, 23), der mit einem Abstand D1 zum Luftfilter und einem Abstand D2 zur Drosseleinrichtung in die Ansaugleitung eingesetzt ist, wobei in der Nähe des Luftmengen- oder Luftmassenmessers ein auf die sich im Betrieb der Brennkraftmaschine einstellende Resonanzfrequenz der Ansaugleitung (19) abgestimmter Helmholtzresonator (24, 25) an die Ansaugleitung gekoppelt ist, dadurch gekennzeichnet, daß der Abstand d des Helmholzresonators (24,25) zum Luftmengen- oder Luftmassenmesser (21, 23) kleiner als 0,5 x D1 oder 0,5 x D2 ist.

2. Sauganlage nach Anspruch 1, dadurch gekennzeichnet, daß der Helmholtzresonator (24) über einen Resonatoranschluß (25) mit der Ansaugleitung (19) verbunden ist, dessen wirksamer Durchmesser DR ist, und daß der Abstand d größer gleich 1,5 x DR ist.

3. Sauganlage nach Anspruch 1 oder 2, dadurch gekennzeichnet, daß der Abstand d so bemessen ist, daß die Ankoppelung des Helmholtzresonators (24) an die Ansaugleitung (19) im Bereich eines Schwingungsbauches der sich im Betrieb der Brennkraftmaschine einstellenden Resonanzfrequenz der Ansaugleitung angeordnet ist.

4. Sauganlage nach Anspruch 3, dadurch gekennzeichnet, daß die Ankoppelung des Helmholtzresonators (24) an die Ansaugleitung (19) im Bereich des ersten Schwingungsbauches erfolgt, dessen Abstand zum Luftmengen- oder Luftmassenmesser (21, 23) größer gleich 1,5 x DR ist.

5. Sauganlage nach einem der vorangehenden Ansprüche, dadurch gekennzeichnet, daß der Helmholtzresonator (24) zwischen dem Luftmengen- oder Luftmassenmesser (21, 23) und der Drosseleinrichtung (20) angeordnet ist.

## Claims

1. An intake system for an internal-combustion engine with an intake line (19), extending between an air filter (22) and a throttle device (20), and with an air-quantity or air-mass meter (21, 23) inserted in the intake line at a distance **D1** from the air filter and at a distance **D2** from the throttle device, wherein a Helmholtz resonator (24, 25) set to the resonance frequency of the intake line (19) occurring during the operation of the internal-combustion engine is coupled to the intake line in the vicinity of the air-quantity or air-mass meter, **characterized in that** the distance **d** of the Helmholtz resonator (24, 25) from the air-quantity or air-mass meter (21, 23) is less than 0·5 × **D1** or 0·5 × **D2.**

2. An intake system according to Claim 1, **characterized in that** the Helmholtz resonator (24) is connected to the intake line (19) by way of a resonator attachment (25), the effective diameter of which is **DR**, and the distance **d** is greater [than or] equal to 1·5 × **DR.**

3. An intake system according to Claim 1 or 2, **characterized in that** the distance **d** is such that the connexion of the Helmholtz resonator (24) to the intake line (19) is situated in the region of an antinode of the resonance frequency of the intake line occurring during the operation of the internal-combustion engine.

4. An intake system according to Claim 3, **characterized in that** the connexion of the Helmholtz resonator (24) to the intake line (19) is in the region of the first antinode, the distance of which from the air-quantity or air-mass meter (21, 23) is greater [than or] equal to 1·5 × **DR.**

5. An intake system according to one of the preceding Claims, **characterized in that** the Helmholtz resonator (24) is arranged between the air-quantity or air-mass meter (21, 23) and the throttle device (20).

## Revendications

1. Système d'aspiration pour un moteur à combustion interne, comportant un conduit d'aspiration (19), qui s'étend entre un filtre à air (22) et un dispositif d'étranglement (20) et comportant un dispositif de mesure de quantités ou de masses d'air (21, 23), qui est inséré dans le conduit d'aspiration, à une distance (D1) du filtre à air et à une distance (D2) du dispositif d'étranglement, un résonateur de Helmholtz (24, 25), accordé à la fréquence de résonance du conduit d'aspiration (19), qui s'établit pendant le fonctionnement du moteur à combustion interne, étant accouplé au conduit d'aspiration à proximité du dispositif de mesure de quantités ou de masses d'air, caractérisé en ce que la distance (d) entre le résonateur de Helmholtz (24, 25) et le dispositif de mesure de quantités ou de masses d'air (21, 23) est inférieure à 0,5 x D1 ou 0,5 x D2.

2. Système d'aspiration selon la revendication 1, caractérisé en ce que le résonateur de Helmholtz (24) est relié au conduit d'aspiration (19), par un raccord (25) du résonateur dont le diamètre utile est DR, et en ce que la distance (d) est égale à 1,5 x DR.

3. Système d'aspiration selon la revendication 1 ou 2, caractérisé en ce que la distance (d) est telle que l'accouplement du résonateur de Helmholtz (24) au conduit d'aspiration (19) est disposé dans la zone d'un ventre d'oscillation de la fréquence de résonance qui s'établit pendant le fonctionnement du moteur à combustion interne.

4. Système d'aspiration selon la revendication 3, caractérisé en ce que l'accouplement du résonateur de Helmholtz (24) ou conduit d'aspiration (19) s'effectue dans la zone du premier ventre d'oscillation dont la distance par rapport au dispositif de mesure de quantités ou de masses d'air (21, 23) est supérieure à 1,5 x DR.

5. Système d'aspiration selon l'une des revendications précédentes, caractérisé en ce que le résonateur de Helmholtz (24) est disposé entre le dispositif de mesure de quantités ou de masses d'air (21, 23) et le dispositif d'étranglement (20).
